# EUROPÄISCHE PATENTSCHRIFT

(11) **EP 0 459 584 B1**
(45) Veröffentlichungstag und Bekanntmachung des Hinweises auf die Patenterteilung: **28.02.1996**
(21) Anmeldenummer: 91201280.4
(22) Anmeldetag: 29.05.1991
(51) Int. Cl.: G06K 13/08, G06K 7/00

(54) **Abtasteinrichtung für eine Chipkarte**
Scanning device for a chip card
Dispositif d'analyse pour microplaquettes

(30) Priorität: 01.06.1990 AT 1197/90
(43) Veröffentlichungstag der Anmeldung: 04.12.1991
(73) Patentinhaber: Philips Electronics N.V., NL-5621 BA Eindhoven (NL)
(72) Erfinder: Parrer, Peter, NL-5656 AA Eindhoven (NL); Pavlovec, Radko, NL-5656 AA Eindhoven (NL)
(74) Vertreter: Cuppens, Hubertus Martinus Maria

(56) Entgegenhaltungen:
- EP-A- 0 167 356
- EP-A- 0 186 737
- EP-A- 0 236 846
- EP-A- 0 282 296
- EP-A- 0 352 995
- EP-A- 0 363 992
- AT-B- 0 389 394
- DE-A- 3 815 959
- US-A- 4 734 567
- US-A- 4 914 279

## Beschreibung

Die Erfindung bezieht sich auf eine Abtasteinrichtung für eine Chipkarte mit einem Chassis, mit einem Aufnahmeraum für die Chipkarte, in den die Chipkarte durch eine Einführöffnung hindurch in einer Einschubrichtung in eine Abtastlage einschiebbar ist, mit einem Schieber, der am Chassis im wesentlichen parallel zur Einschubrichtung zwischen einer Ruhelage und einer Betriebslage verstellbar geführt und von mindestens einer Feder entgegen der Einschubrichtung belastet ist und der beim Einschieben einer Chipkarte in ihre Abtastlage von seiner Ruhelage in seine Betriebslage verschoben wird und bei dessen Verschiebung von seiner Betriebslage in seine Ruhelage die Chipkarte entgegen der Einschubrichtung aus ihrer Abtastlage verschoben wird, und mit einer in der Einschubrichtung betätigbaren Handhabe, bei deren Betätigung der Schieber von seiner Betriebslage in seine Ruhelage verschoben wird.

Eine solche Abtasteinrichtung für eine Chipkarte ist beispielsweise aus der US-PS 4 724 310 bekannt. Bei dieser bekannten Abtasteinrichtung liegt der hiebei rahmenförmig ausgebildete Schieber in seiner Ruhelage näher bei der Einführöffnung zum Einschieben und Herausziehen einer Chipkarte als in seiner Betriebslage, in der er von der Einführöffnung weiter weg liegt. Beim Einschieben einer Chipkarte in die Abtasteinrichtung stößt nach etwas mehr als dem halben Einschiebeweg die Chipkarte gegen eine von dem Schieber abstehende Leiste, wonach beim weiteren Einschieben der Chipkarte der Schieber über dessen Leiste von der Chipkarte entgegen der Kraft der den Schieber belastenden Feder in der Einschubrichtung der Chipkarte aus seiner Ruhelage in Richtung zu seiner Betriebslage verschoben wird. Dabei stößt der Schieber gegen einen L-förmigen, ebenfalls federbelasteten Steuerhebel und nimmt diesen mit, so daß dann beim weiteren Einschieben der Chipkarte zusätzlich auch noch die Kraft der den L-förmigen Steuerhebel belastenden Feder überwunden werden muß. Bei dieser bekannten Abtasteinrichtung ist somit nur während etwa der ersten Hälfte des Einschiebeweges der Chipkarte ein unbelastetes, leichtgängiges Einschieben der Chipkarte möglich, wogegen während des restlichen Einschiebeweges das Einschieben der Chipkarte entgegen der Kraft der den Schieber belastenden Feder und im weiteren auch noch gegen die zusätzliche Kraft der den L-förmigen Steuerhebel belastenden Feder erfolgt, so daß bereits nach etwas mehr als dem halben Einschiebeweg das Einschieben relativ schwergängig wird und die Schwergängigkeit gegen Ende des Einschiebens sogar noch zunimmt. Dies wird von vielen Benützern dieser bekannten Abtasteinrichtung als unangenehm und störend empfunden. Außerdem kann es durch die dem Einschieben entgegenwirkenden Federkräfte auch zu einer relativ starken mechanischen Banspruchung einer einzuschiebenden Chipkarte kommen.

Um bei der aus der US-PS 4 724 310 bekannten Abtasteinrichtung eine Chipkarte nach einem abgeschlossenen Abtastvorgang aus der Abtasteinrichtung entnehmen zu können, kann die als Drucktaste ausgebildete Handhabe von einem Benützer betätigt werden. Die Drucktaste ist dabei auf separate Weise in dem Chassis verstellbar gehalten und wirkt mit einem Verriegelungshebel zusammen, der bei Betätigung der Drucktaste einen verschiebbar geführten Steuerschieber freigibt, der dann von einer einerseits an ihm angreifenden zweiarmigen Schenkelfeder, die andererseits an dem bereits vorerwähnten L-förmigen, ebenfalls federbelasteten, mit dem Schieber zusammenwirkenden Steuerhebel angreift, in eine Ausgangslage verschoben wird, wobei der Steuerschieber zwei zum Hintergreifen einer in ihrer Abtastlage befindlichen Chipkarte vorgesehene Sperriegel in eine Freigabelage verschwenkt, in der die Sperriegel die Chipkarte freigeben, so daß die Chipkarte unter der Kraft der am Schieber angreifenden Feder über die Leiste des Schiebers aus ihrer Abtastlage geschoben wird. Dadurch wird die Chipkarte durch die Einführöffnung hindurch so weit aus der Abtasteinrichtung ausgeworfen, daß sie von Hand aus erfaßt und aus der Abtasteinrichtung gezogen werden kann. Wie aus vorstehendem ersichtlich ist, wirkt die als Drucktaste ausgebildete Handhabe auf einen relativ aufwendigen Mechanismus ein, über den bei Betätigung der Drucktaste ein Auswerfen der Chipkarte aus der Abtasteinrichtung erreicht wird. Durch einen solchen aufwendigen Mechanismus wird aber die Abtasteinrichtung verteuert und ihre Störanfälligkeit vergrößert und ihre Lebensdauer verringert.

Die Erfindung hat sich zur Aufgabe gestellt, die vorstehenden angeführten Schwierigkeiten mit einfachen Mitteln zu vermeiden und bei einer Abtasteinrichtung der eingangs angeführten Gattung während praktisch des gesamten Einschiebeweges einer Chipkarte ein leichtgängiges Einschieben der Chipkarte zu erreichen sowie ohne einen relativ aufwendigen, von der Handhabe steuerbaren Mechanismus für das Auswerfen einer Chipkarte aus der Abtasteinrichtung auszukommen. Hiefür ist die Erfindung dadurch gekennzeichnet, daß eine zwischen einer Blockierlage und einer Freigabelage verstellbare Verriegelungseinrichtung vorgesehen ist, die von mindestens einer weiteren Feder in Richtung zu ihrer Blockierlage belastet ist und die in ihrer Blockierlage den Schieber entgegen der Kraft der ihn belastenden Feder in seiner Ruhelage blockiert, daß die Verriegelungseinrichtung einen von der Chipkarte betätigbaren Verstellanschlag aufweist, über den von der Chipkarte am Ende des Einschiebens derselben in ihre Abtastlage die Verriegelungseinrichtung entgegen der Kraft der weiteren Feder in ihre Freigabelage verstellbar ist, daß nach einer Verstellung der Verriegelungseinrichtung in ihre Freigabelage der Schieber unter der Kraft der ihn belastenden Feder entgegen der Einschubrichtung aus seiner Ruhelage in seine Betriebslage verschiebbar ist, daß die Handhabe an dem Schieber vorgesehen ist und durch Betätigen der Handhabe der Schieber entgegen der Kraft der ihn belastenden Feder in der Einschubrichtung aus seiner Betriebslage in seine Ruhelage verschiebbar ist und daß nach einer Verschiebung des Schiebers in seine Ruhelage die Verriegelungseinrichtung unter der Kraft der weiteren Feder in ihre Blockierlage verstellbar ist, wobei von dem Verstellanschlag der Verriegelungseinrichtung die Chipkarte entgegen der Einschubrichtung aus ihrer Abtastlage geschoben wird. Auf diese Weise ist erreicht, daß eine Chipkarte beim Einschieben derselben in die Abtasteinrichtung erst am Ende des Einschiebeweges gegen den Verstellanschlag der Verriegelungseinrichtung stößt, so daß vorteilhafterweise während praktisch des gesamten Einschiebevorganges einer Chipkarte ein leichtgängiges Einschieben gewährleistet ist. Weiters ist hiedurch vorteilhafterweise erreicht, daß das Spannen der den Schieber belastenden Feder von Hand aus beim Betätigen der Handhabe und nicht von der Chipkarte her beim Einschieben derselben erfolgt. Hiedurch ist insgesamt eine nur minimale mechanische Belastung einer Chipkarte beim Einschieben derselben in die Abtasteinrichtung gewährleistet. Dadurch, daß die Handhabe an dem Schieber angebracht ist, ist ein besonders einfacher Aufbau erhalten, bei dem ohne einen aufwendigen, von der Handhabe steuerbaren Mechanismus für das Auswerfen einer Chipkarte das Auslangen gefunden wird, was hinsichtlich hoher Betriebssicherheit, langer Lebensdauer und möglichst geringer Herstellungskosten vorteilhaft ist. Bei der erfindungsgemäßen Abtasteinrichtung wird, wenn eine Chipkarte beim Einschieben derselben in die Abtasteinrichtung ihre Abtastlage erreicht hat, der Schieber unter der Kraft der ihn belastenden Feder entgegen der Einschubrichtung verschoben, wodurch auch die am Schieber angebrachte Handhabe entgegen der Einschubrichtung verschoben wird, was für den Benützer der Abtasteinrichtung vorteilhafterweise eine deutlich sichtbare Anzeige ergibt, daß die Chipkarte von ihm ordnungsgemäß in ihre Abtastlage eingeschoben wurde.

Bei in ihre Abtastlage eingeschobener Chipkarte kann der Verstellanschlag der Verriegelungseinrichtung unter der Kraft der weiteren Feder gegen die Chipkarte drücken. Um für diesen Fall die Chipkarte in ihrer Abtastlage zu fixieren, kann der Schieber bei seiner Verschiebung von seiner Ruhelage in seine Betriebslage entgegen der Einschubrichtung mindestens einen verstellbaren Sperrhaken von einer Ruheposition in eine Sperrposition verstellen, in welch letzterer der Sperrhaken die in ihrer Abtastlage befindliche Chipkarte an ihrem in der Einschubrichtung gesehen hinteren Ende hintergreift und dadurch in ihrer Abtastlage fixiert. Als vorteilhaft hat sich aber erwiesen, wenn der Schieber einen Begrenzungsanschlag aufweist, an dem sich bei in seine Betriebslage verschobenem Schieber die Verriegelungseinrichtung mit einem Gegenanschlag unter der Kraft der weiteren Feder abstützt. Auf diese Weise ist erreicht, daß bei in ihrer Abtastlage befindlicher Chipkarte die Kraft der weiteren Feder von dem in seiner Betriebslage befindlichen Schieber aufgenommen wird, so daß von der weiteren Feder über den Verstellanschlag der Verriegelungseinrichtung keine Kraft auf die in ihrer Abtastlage befindliche Chipkarte ausgeübt wird. Dadurch kann vorteilhafterweise ohne separate Mittel zum Festhalten der Chipkarte in ihrer Abtastlage das Auslangen gefunden werden. Die Chipkarte kann beispielsweise lediglich durch auf sie einwirkende Reibkräfte kraftschlüssig in ihrer Abtastlage gehalten werden.

Die Verriegelungseinrichtung kann beispielweise aus mehreren Teilen bestehen; sie kann auch nur einen schräg zur Einschubrichtung verstellbar geführten Verriegelungsschieber aufweisen. Als vorteilhaft hat sich erwiesen, wenn die Verriegelungseinrichtung einen einzigen am Chassis schwenkbar gelagerten zweiarmigen Verriegelungshebel aufweist, der an seinem einen Arm den von der Chipkarte betätigbaren Verstellanschlag und an seinem anderen Arm einen zum Blockieren des Schiebers in seiner Ruhelage vorgesehenen Blockieranschlag aufweist. Hiedurch ist eine einfache und leichtgängige Ausbildung für die Verriegelungseinrichtung erreicht, die zusätzlich einfach und leicht dimensionierbar und justierbar ist, um einen gewünschten Auswerfhub für die Chipkarte zu erreichen.

Der Verriegelungshebel kann einen separaten Blockieranschlag und einen separaten Gegenanschlag aufweisen. Als besonders vorteilhaft hat sich erwiesen, wenn der Blockieranschlag zusätzlich den Gegenanschlag bildet, mit dem sich bei in seine Betriebslage verschobenem Schieber der Verriegelungshebel an dem Begrenzungsanschlag des Schiebers abstützt. Hiedurch erfüllt der Blockieranschlag vorteilhafterweise eine Doppelfunktion, was hinsichtlich einer besonders einfachen Ausbildung des Verriegelungshebels vorteilhaft ist.

Der Schieber kann auf unterschiedliche Weise ausgebildet und angeordnet werden, beispielsweise rahmenförmig oder balkenförmig und neben, ober oder unter einer Chipkarte. Als vorteilhaft hat sich erwiesen, wenn der Schieber im wesentlichen plattenförmig ausgebildet ist und mit seiner Plattenebene im wesentlichen parallel zur Kartenebene der Chipkarte verläuft. Hiedurch ist eine einfache und mechanisch stabile Ausbildung des Schiebers erreicht, die zusätzlich hinsichtlich einer möglichst kleinen Bauhöhe senkrecht zur Kartenebene der Chipkarte vorteilhaft ist.

Bei einer erfindungsgemäßen Abtasteinrichtung, die einen zu der Chipkarte hin und von derselben weg verstellbaren, zu seiner Verstellung mit dem Schieber gekoppelten Kontaktträger aufweist, der Kontakte trägt, die durch Verschieben des Schiebers in seine Betriebslage und dabei erfolgendem Verstellen des Kontaktträgers zu der Chipkarte hin mit Gegenkontakten an der Chipkarte in Kontaktverbindung bringbar sind, hat sich als vorteilhaft erwiesen, wenn der im wesentlichen plattenförmig ausgebildete Schieber zwei senkrecht von demselben abstehende Seitenplatten aufweist und der Kontaktträger mit dem Schieber über zwischen dem Kontaktträger und den beiden Seitenplatten wirksame Stift-Schlitz-Kulissen gekoppelt ist, deren Schlitze schräg zur Plattenebene des Schiebers verlaufen, und der Kontaktträger quer zur Kartenebene der Chipkarte am Chassis verstellbar geführt ist. Auf diese Weise ist mit besonders einfachen Mitteln eine formschlüssige und zwangsweise und daher besonders sichere Verstellung des Kontaktträgers sowohl zu der Chipkarte hin als auch von derselben weg gewährleistet.

Die Führung des Kontaktträgers kann auf unterschiedliche Weise erfolgen, beispielsweise indem der Kontaktträger unmittelbar in chassisseitigen nutartigen Ausnehmungen geführt ist. Als vorteilhaft hat sich erwiesen, wenn der Kontaktträger über zwischen dem Kontaktträger und dem Chassis wirksame Stift-Schlitz-Führungen am Chassis verstellbar geführt ist. Auf diese Weise ist eine einfache, leichtgängige, gegen Verkanten und gegen kraftschlüssiges Verklemmen sichere Führung für den Kontaktträger erreicht.

Als vorteilhaft hat sich weiters erwiesen, wenn die Stifte der Stift-Schlitz-Kulissen und der Stift-Schlitz-Führungen mit dem Kontaktträger verbunden sind und von demselben seitlich abstehen und die Schlitze der Stift-Schlitz-Kulissen in den Seitenplatten des Schiebers und die Schlitze der Stift-Schlitz-Führungen im Chassis vorgesehen sind. Dies ist hinsichtlich eines möglichst einfachen Zusammenbauens bei der Herstellung der Abtasteinrichtung vorteilhaft.

Weiters hat sich als besonders vorteilhaft erwiesen, wenn jeder der Stifte sowohl einer Stift-Schlitz-Kulisse als auch einer Stift-Schlitz-Führung angehört. Hiedurch erfüllen die Stifte eine Doppelfunktion, was hinsichtlich einer besonders einfachen Ausbildung vorteilhaft ist.

Bei zur Chipkarte hin verstelltem Kontaktträger kann die Chipkarte niveaumäßig, also senkrecht zur Kartenebene lediglich durch die auf die Gegenkontakte einwirkenden Kontakte des Kontaktträgers positioniert werden. Da diese Kontakte praktisch immer federnd ausgebildet sind, ist mit diesen keine sichere niveaumäßige Positionierung der Chipkarte gewährleistet. Als vorteilhaft hat sich daher erwiesen, wenn der Kontaktträger mindestens ein neben den Kontakten angeordnetes Andruckelement aufweist, das bei in seine Betriebslage verschobenem Schieber und dabei zur Chipkarte hin verstelltem Kontaktträger gegen die Chipkarte und dabei die Chipkarte gegen eine Auflagefläche am Chassis drückt. Hiedurch ist eine sichere niveaumäßige Positionierung der in ihrer Abtastlage befindlichen Chipkarte erreicht. Auch kann mit einem solchen Andruckelement ein Sichern der Chipkarte gegen Verschieben aus ihrer Abtastlage erreicht werden.

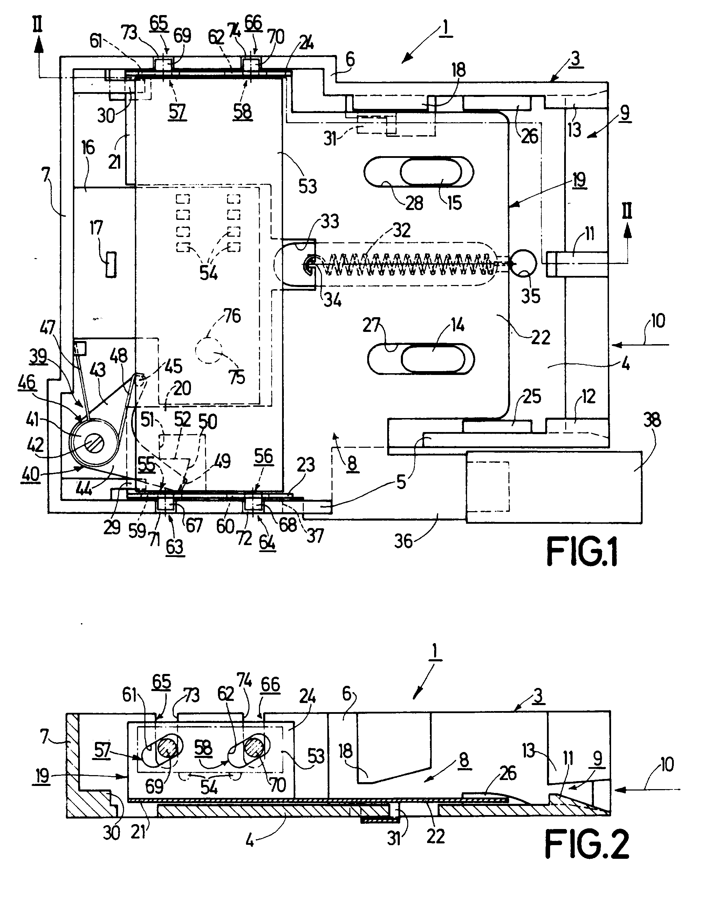

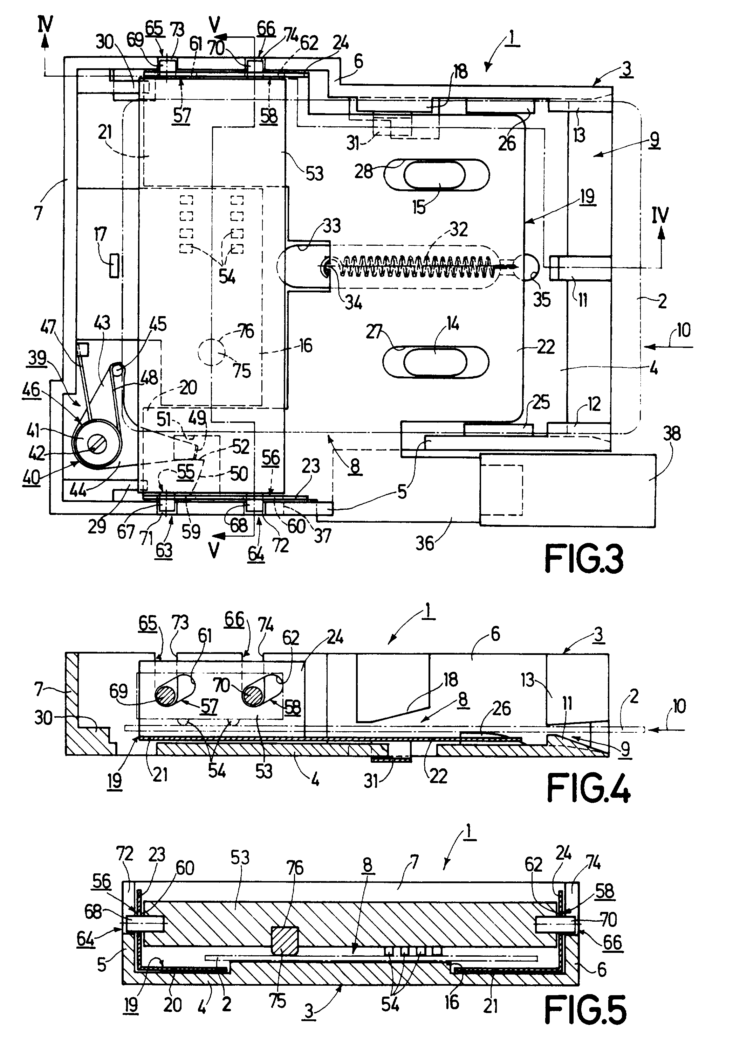

Die Erfindung wird im folgenden anhand eines in den Zeichnungen dargestellten Ausführungsbeispieles, auf das die Erfindung jedoch nicht beschränkt sein soll, näher beschrieben. Die Fig.1 zeigt in einem gegenüber der natürlichen Größe größeren Maßstab in Draufsicht eine Abtasteinrichtung für eine Chipkarte, wobei in diese Abtasteinrichtung keine Chipkarte eingeschoben ist und wobei ein zwischen einer Ruhelage und einer Betriebslage verschiebbar geführter Schieber der Abtasteinrichtung mittels eines zwischen einer Blockierlage und einer Freigabelage verschwenkbaren Verriegelungshebels, der gemäß Fig.1 seine Blockierlage einnimmt, in seiner Ruhelage blockiert ist. Die Fig.2 zeigt in einem Schnitt längs der Linie II-II in Fig.1 die Abtasteinrichtung gemäß Fig.1, wobei ein Kontaktträger der Abtasteinrichtung nur mit strichpunktierten Linien schematisch dargestellt ist. Die Fig.3 zeigt auf analoge Weise wie die Fig.1 die Abtasteinrichtung gemäß Fig.1, jedoch mit in die Abtasteinrichtung bis in ihre Abtastlage eingeschobener Chipkarte, wobei der Schieber in seine Betriebslage verschoben und der Verriegelungshebel in seine Freigabelage verschwenkt ist. Die Fig.4 zeigt auf analoge Weise wie die Fig.2 in einem Schnitt längs der Linie IV-IV in Fig.3 die Abtasteinrichtung gemäß Fig.3. Die Fig.5 zeigt in einem Schnitt längs der Linie V-V in Fig.3 ein Detail der Abtasteinrichtung gemäß Fig.3, das sich im wesentlichen auf den Kontaktträger der Abtasteinrichtung bezieht.

In den Figuren 1 bis 5 ist eine Abtasteinrichtung 1 für eine Chipkarte 2 dargestellt. Die Chipkarte 2 ist in den Figuren 3 bis 5 schematisch mit einer strichpunktierten Linie dargestellt. Die Abtasteinrichtung 1 weist ein aus Kunststoff bestehendes, im wesentlichen wannenförmiges Chassis 3 auf. Das Chassis 3 weist eine Bodenwand 4 auf, von der eine aus zwei zueinander versetzten Abschnitten bestehende erste Seitenwand 5, eine abgewinkelt verlaufende zweite Seitenwand 6 und eine ebenfalls abgewinkelt verlaufende Rückwand 7 rechtwinkelig abstehen.

In dem Chassis 3 ist ein Aufnahmeraum 8 für eine Chipkarte 2 vorgesehen. In den Aufnahmeraum 8 ist eine Chipkarte 2 durch eine im Bereich der Vorderseite der Abtasteinrichtung 1 vorgesehene Einführöffnung 9 hindurch in einer mit einem Pfeil 10 angegebenen Einschubrichtung in eine Abtastlage einschiebbar. Die Abtastlage der Chipkarte 2 in der Abtasteinrichtung 1 ist aus den Figuren 3, 4 und 5 ersichtlich. Die Einführöffnung 9 ist seitlich durch die beiden Seitenwände 5 und 6 und höhenmäßig durch eine von der Bodenwand 4 abstehende, in der Einschubrichtung 10 einen ansteigenden Verlauf aufweisende Rippe 11 und durch je eine von der Seitenwand 5 bzw. von der Seitenwand 6 abstehende Rippe 12 bzw. 13 begrenzt. Die beiden Rippen 12 und 13 weisen in ihrem der Bodenwand 4 benachbart liegenden Bereich einen in Einschubrichtung 10 zur Bodenwand 4 hin abfallenden Verlauf auf. Zur seitlichen Begrenzung des Aufnahmeraumes 8 für die Chipkarte 2 dienen teilweise die beiden Seitenwände 5 und 6 des Chassis 3. Weiters weist das Chassis 3 zur höhenmäßigen Begrenzung des Aufnahmeraumes 8 zwei von der Bodenwand 4 abstehende ovalförmige Erhebungen 14 und 15 auf, auf denen die Chipkarte 2 aufliegt. Weiters ist zur höhenmäßigen Begrenzung des Aufnahmeraumes 8 eine von der Bodenwand 4 abstehende, in Draufsicht etwa L-förmige Auflagefläche 16, gegen die die Chipkarte 2 gedrückt wird, wie nachfolgend noch genauer beschrieben wird, und ist zur seitlichen Begrenzung des Aufnahmeraumes 8 ein von der Auflagefläche 16 abstehender Anschlag 17 vorgesehen, der den maximalen Einschiebeweg der Chipkarte 2 begrenzt. Schließlich weist das Chassis 3 zur höhenmäßigen Begrenzung des Aufnahmeraumes 8 noch eine von der Seitenwand 6 abstehende weitere Rippe 18 auf, die in ihrem der Bodenwand 4 zugewandten Bereich einen in der Einschubrichtung 10 zu der Bodenwand 4 hin abfallenden Verlauf aufweist.

Die Abtasteinrichtung 1 weist einen aus Stahl bestehenden Schieber 19 auf, der in Draufsicht gemäß den Figuren 1 und 3 im wesentlichen U-förmig ausgebildet ist und hiebei einen ersten Schenkelabschnitt 20, einen zweiten Schenkelabschnitt 21 und einen die beiden Schenkelabschnitte 20 und 21 miteinander verbindenden Stegabschnitt 22 aufweist. Der Schieber 19 ist im wesentlichen plattenförmig ausgebildet und verläuft mit seiner Plattenebene parallel zur Kartenebene der Chipkarte 2 und parallel zur Bodenwand 4 des Chassis 3. Der Schieber 19 liegt mit seinen Schenkelabschnitten 20 und 21 und mit seinem Stegabschnitt 22 unmittelbar an der Bodenwand 4 des Chassis 3 an, was hinsichtlich einer möglichst geringen Bauhöhe vorteilhaft ist. Der im wesentlichen plattenförmig ausgebildete Schieber 19 weist zwei senkrecht von demselben abstehende Seitenplatten 23 und 24 auf, wobei die Seitenplatte 23 von dem ersten Schenkelabschnitt 20 und die Seitenplatte 24 von dem zweiten Schenkelabschnitt 21 senkrecht absteht.

Der Schieber 19 ist am Chassis 3 parallel zur Einschubrichtung 10 zwischen einer in den Figuren 1 und 2 dargestellten Ruhelage und einer in den Figuren 3 und 4 dargestellten Betriebslage verstellbar geführt. Die seitliche Führung des Schiebers 19 erfolgt teilweise mit Hilfe seiner Seitenplatten 23 und 24, die hiefür mit den Seitenwänden 5 und 6 des Chassis 3 zusammenwirken. Weiters sind zur seitlichen Führung des Schiebers 19 zwei von den Seitenwänden 5 und 6 des Chassis 3 vorspringende Führungsrippen 25 und 26 vorgesehen. Eine zusätzliche seitliche Führung erfolgt mit den beiden ovalförmigen Erhebungen 14 und 15, die durch Langlöcher 27 und 28 in dem Stegabschnitt 22 des Schiebers 19 hindurchgeführt sind. Der Schieber 19 liegt zur höhenmäßigen Führung an der Bodenwand 4 des Chassis 3 an und ist im Bereich seiner Schenkelabschnitte 20 und 21 von je einem vom Chassis 3 abstehenden Niederhaltelappen 29 und 30 übergriffen. Mit einem vom Stegabschnitt 22 abgewinkelten L-förmigen Haken 31 untergreift der Schieber 19 die Bodenwand 4 des Chassis 3. Mit Hilfe der Niederhaltelappen 29 und 30 und dem Haken 31 ist der Schieber 19 zur Bodenwand 4 des Chassis 3 hin gehalten und auf diese Weise höhenmäßig positioniert.

Der Schieber 19 ist von einer als Zugfeder ausgebildeten Feder 32 entgegen der Einschubrichtung 10 belastet. Die Zugfeder 32 ist hiebei in einer länglichen Ausnehmung 33 in der Bodenwand 4 des Chassis 3 angeordnet und einerseits an einem von dem Stegabschnitt 22 des Schiebers 19 in die Ausnehmung 33 ragenden abgewinkelten Fortsatz 34 und andererseits in einem in der Bodenwand 4 vorgesehenen Loch 35 an der Bodenwand 4 eingehängt.

Im Übergangsbereich zwischen dem ersten Schenkelabschnitt 20 und dem Stegabschnitt 22 weist der Schieber 19 einen von demselben entgegen der Einschubrichtung 10 abstehenden Betätigungsabschnitt 36 auf. Der Betätigungsabschnitt 36 ist in seinem in den ersten Schenkelabschnitt 20 übergehenden Bereich zur zusätzlichen höhenmäßigen Führung des Schiebers 19 in einem zwischen der Bodenwand 4 und der Seitenwand 5 des Chassis 3 vorgesehenen Schlitz 37 geführt. Mit dem freien Ende des Betätigungsabschnittes 36 ist eine als Druckknopf ausgebildete Handhabe 38 verbunden. Die Handhabe 38 könnte aber auch durch den Betätigungsabschnitt 36 selbst gebildet sein, wobei dann der Betätigungsabschnitt 36 länger und an seinem freien Ende beispielsweise durch zweifaches Abwinkeln U-förmig ausgebildet wäre. Die Verbindung des Druckknopfes 38 mit dem Betätigungsabschnitt 36 erfolgt mittels einer nicht dargestellten Schnappverbindung; sie könnte auch mittels einer Klebeverbindung erfolgen. Der Druckknopf 38 ist von Hand aus in der Einschubrichtung 10 betätigbar, wobei bei einer solchen Betätigung der Schieber 19 von seiner Betriebslage in seine Ruhelage verschoben wird.

Die Abtasteinrichtung 1 weist nunmehr eine zwischen einer in Fig.1 dargestellten Blockierlage und einer in Fig.3 dargestellten Freigabelage verstellbare Verriegelungseinrichtung 39 für den Schieber 19 auf. Die Verriegelungseinrichtung 39 weist hiebei auf besonders einfache Weise nur einen einzigen am Chassis 3 schwenkbar gelagerten zweiarmigen Verriegelungshebel 40 auf. Der Verriegelungshebel 40 ist mit einem zylindrischen Ansatz 41 versehen, durch den eine in das Chassis 3 eingeschraubte Befestigungsschraube 42 hindurchgeführt ist, wobei der Verriegelungshebel 40 um einen gewindelosen Bolzenabschnitt der Befestigungsschraube 42 verschwenkbar ist. Der Verriegelungshebel 40 weist einen ersten Arm 43 und einen zweiten Arm 44 auf. Von dem ersten Arm 43 steht ein Stift 45 ab, und zwar in der von der Bodenwand 4 weg verlaufenden Richtung. Auf den zylindrischen Ansatz 41 des Verriegelungshebels 40 ist eine als weitere Feder vorgesehene Schenkelfeder 46 aufgesetzt, von der sich ein erster Schenkel 47 an der Rückwand 7 des Chassis 3 abstützt und von der ein zweiter Schenkel 48 an dem Stift 45 angreift, wodurch der Verriegelungshebel 40 in Richtung zu seiner in Fig.1 dargestellten Blockierlage belastet ist. Die Schenkelfeder 46 ist relativ schwach dimensioniert, sie weist also nur eine kleine Federkraft auf. Die Blockierlage des Verriegelungshebels 40 ist dabei dadurch bestimmt, daß sich der Verriegelungshebel 40 mit seinem zweiten Arm 44 an der Seitenplatte 23 des Schiebers 19 abstützt. In dieser Blockierlage blockiert der Verriegelungshebel 40 den Schieber 19 entgegen der Kraft der ihn belastenden Zugfeder 32 in seiner Ruhelage. Hiefür weist der Verriegelungshebel 40 am freien Ende seines zweiten Armes 44 einen von letzterem in Richtung zur Bodenwand 4 hin abstehenden lappenförmigen Blockieranschlag 49 auf. Dieser Blockieranschlag 49 wirkt mit einer kreisbogenförmig verlaufenden Anschlagfläche 50 zusammen, die im Bereich einer in dem ersten Schenkelabschnitt 20 des Schiebers 19 vorgesehenen Ausnehmung 51, in die der Blockieranschlag 49 hineinragt, vorgesehen ist.

Der Verriegelungshebel 40 weist, wie bereits erwähnt, einen von dessen erstem Arm 43 abstehenden Stift 45 auf. Der Stift 45 ragt in den Aufnahmeraum 8 für die Chipkarte 2 hinein. Dieser Stift 45 bildet zusätzlich einen von einer Chipkarte 2 betätigbaren Verstellanschlag, über den von der Chipkarte 2 am Ende des Einschiebens derselben in ihre Abtastlage die Verriegelungseinrichtung 39 in ihre Freigabelage verstellbar ist. Nach einer Verstellung der Verriegelungseinrichtung 39 in ihre Freigabelage ist der Schieber 19 unter der Kraft der ihn belastenden Zugfeder 32 entgegen der Einschubrichtung 10 aus seiner in Fig.1 dargestellten Ruhelage in seine in Fig.3 dargestellte Betriebslage verschiebbar.

Der Schieber 19 weist im Bereich der im ersten Schenkelabschnitt 20 vorgesehenen Ausnehmung 51 eine Anschlagfläche 52 auf, die einen Begrenzungsanschlag bildet, an dem sich wie aus Fig.3 ersichtlich, bei in seine Betriebslage verschobenem Schieber 19 die Verriegelungseinrichtung 39 mit einem Gegenanschlag unter der Kraft der Schenkelfeder 46 abstützt. Dabei ist in vorliegendem Fall auf besonders einfache Weise als Gegenanschlag der Blockieranschlag 49 des Verriegelungshebels 40 ausgenützt. Dadurch, daß sich der Verriegelungshebel 40 mit seinem Blockieranschlag 49 an der Anschlagfläche 52 des in seine Betriebslage verschobenen Schiebers 19 abstützt, ist vorteilhafterweise erreicht, daß von der Schenkelfeder 46 über den Stift 45 keine Kraft auf die in ihrer Abtastlage befindliche Chipkarte 2 ausgeübt wird, da die von der Schenkelfeder 46 auf den Verriegelungshebel 40 ausgeübte Kraft über den Blockieranschlag 49 und die Anschlagfläche 52 von dem Schieber 19 aufgenommen wird.

Wie bereits erwähnt, ist die als Druckknopf ausgebildete Handhabe 38 in besonders einfacher Weise direkt an dem Schieber 19 angebracht. Durch Betätigen der Handhabe 38 ist der Schieber 19 entgegen der Kraft der ihn belastenden Zugfeder 32 in der Einschubrichtung 10 aus seiner Betriebslage in seine Ruhelage verschiebbar. Nach einer Verschiebung des Schiebers 19 in seine Ruhelage ist die Verriegelungseinrichtung 39 unter der Kraft der Schenkelfeder 46 in ihre Blockierlage verstellbar, nachdem die Anschlagfläche 52 des Schiebers 19 den Blockieranschlag 49 des Verriegelungshebels 40 freigegeben hat. Bei einer solchen Verstellung der Verriegelungseinrichtung 39 in ihre Blockierlage wird von dem als Verstellanschlag vorgesehenen Stift 45 der Verriegelungseinrichtung 39 die Chipkarte 2 entgegen der Einschubrichtung 10 aus ihrer Abtastlage geschoben.

Die Abtasteinrichtung 1 weist weiters einen Kontaktträger 53 auf, der in den Figuren 1 bis 5 nur schematisch dargestellt ist. Der Kontaktträger 53 ist zu der Chipkarte 2 hin und von derselben weg verstellbar. Zu seiner Verstellung ist der Kontaktträger 53 mit dem Schieber 19 gekoppelt. Der Kontaktträger 53 trägt Kontakte 54, die durch Verschieben des Schiebers 19 in seine Betriebslage und dabei erfolgendem Verstellen des Kontaktträgers 53 zu der Chipkarte 2 hin mit Gegenkontakten an der Chipkarte 2 in Kontaktverbindung bringbar sind. Die kartenseitigen Gegenkontakte sind der Einfachheit halber in den Figuren 3 bis 5 nicht dargestellt. Der Kontaktträger 53 ist mit dem Schieber 19 auf sehr einfache und raumsparende Weise über zwischen dem Kontaktträger 53 und den beiden Seitenplatten 23 und 24 wirksame Stift-Schlitz-Kulissen 55, 56, 57 und 58 gekoppelt, deren Schlitze 59, 60, 61 und 62 schräg zur Plattenebene des Schiebers 19 verlaufen. Der Kontaktträger 53 ist quer zur Kartenebene der Chipkarte 2 am Chassis 3 verstellbar geführt. In vorliegendem Fall ist der Kontaktträger 53 genau senkrecht zur Kartenebene der Chipkarte 2 und zur Bodenwand 4 des Chassis 3 verstellbar geführt, was aber nicht unbedingt der Fall sein muß. Der Kontaktträger 53 ist dabei über zwischen dem Kontaktträger 53 und den beiden Seitenwänden 5 und 6 des Chassis 3 wirksame Stift-Schlitz-Führungen 63, 64, 65 und 66 am Chassis 3 verstellbar geführt, wodurch eine einfache, leichtgängige und gegen Verkanten und gegen kraftschlüssiges Verklemmen sichere Führung für den Kontaktträger 53 erreicht ist. Wie aus den Figuren ersichtlich ist, sind die Stifte 67, 68, 69 und 70 der Stift-Schlitz-Kulissen 55, 56, 57 und 58 und der Stift-Schlitz-Führungen 63, 64, 65, und 66 mit dem Kontaktträger 53 verbunden, wobei sie von demselben seitlich abstehen. Die Schlitze 59, 60, 61 und 62 der Stift-Schlitz-Kulissen 55, 56, 57, 58 sind in den Seitenplatten 23 und 24 des Schiebers 19 und die Schlitze 71, 72, 73 und 74 der Stift-Schlitz-Führungen 63, 64, 65 und 66 sind im Chassis 3, und zwar in dessen Seitenwänden 5 und 6 vorgesehen. Dies hat sich vorteilhaft für einen einfachen Zusammenbau erwiesen. Dabei gehört jeder der Stifte 67, 68, 69 und 70 sowohl einer Stift-Schlitz-Kulisse 55, 56, 57 und 58 als auch einer Stift-Schlitz-Führung 63, 64, 65 und 66 an, wodurch mit einer geringen Anzahl an Stiften das Auslangen gefunden wird.

Wie aus den Figuren 1 bis 4, jedoch insbesondere aus Fig.5 ersichtlich ist, weist der Kontaktträger 53 ein mit Abstand neben den Kontakten 54 angeordnetes Andruckelement 75 auf. Das Andruckelement 75 ist durch einen beispielsweise aus Silikongummi bestehenden zylinderförmigen Pfropfen gebildet, der in eine Ausnehmung 76 im Kontaktträger 53 eingesetzt ist. Wie aus Fig.5 hervorgeht, drückt das Andruckelement 75 bei in seine Betriebslage verschobenem Schieber 19 und dabei zur Chipkarte 2 hin verstelltem Kontaktträger 53 gegen die Chipkarte 2 und dabei die Chipkarte 2 gegen die Auflagefläche 16 am Chassis 3, wodurch eine exakte höhenmäßige Positionierung der in ihrer Abtastlage befindlichen Chipkarte 2 gewährleistet ist.

Im folgenden ist kurz die Funktionsweise der vorstehend beschriebenen Abtasteinrichtung 1 für eine Chipkarte 2 beschrieben.

Um eine Chipkarte 2 in die in Fig.3 dargestellte Abtastlage zu bringen, wird dieselbe in der Einschubrichtung 10 durch die Einführöffnung 9 hindurch in den Aufnahmeraum 8 für die Chipkarte 2 eingeschoben. Dies erfolgt vorteilhafterweise während praktisch des gesamten Einschiebeweges widerstandslos, also besonders leichtgängig, was für einen Benützer angenehm und besonders kartenschonend ist. Praktisch erst am Ende des Einschiebeweges der Chipkarte 2 stößt dieselbe gegen den Stift 45, wonach die Verriegelungseinrichtung 39 aus der in Fig.1 dargestellten Blockierlage verstellt wird. Diese Verstellung der Verriegelungseinrichtung 39 erfolgt gegen die Kraft der nur relativ schwachen Schenkelfeder 46 und gegen die Reibkraft, die von dem mit der Zugfeder 32 belasteten Schieber 19 von dessen Anschlagfläche 50 auf den Blockieranschlag 49 ausgeübt wird und deren Größe von der Kraft der Zugfeder 32 und dem Reibungskoeffizienten abhängig ist. Da bei üblichen Reibungskoeffizienten von 0,1 bis 0,2 diese Reibkraft nur einem Bruchteil der Federkraft der Zugfeder 32 entspricht, spielt dieser Anteil an den die Verriegelungseinrichtung 39 belastenden Kräften praktisch keine wesentliche Rolle, so daß insgesamt gesehen die einer Verstellung der Verriegelungseinrichtung 39 in ihre Freigabelage entgegenwirkenden Kräfte gering sind und daher die am Ende des Einschiebens einer Chipkarte 2 in die Abtasteinrichtung 1 auftretende mechanische Belastung der Chipkarte 2 ebenfalls nur gering ist. Beim weiteren Einschieben der Chipkarte 2 wird die eigentliche Abtastlage derselben mit einem ganz geringen Überhub überfahren, bis die Chipkarte 2 gegen den Anschlag 17 an der Auflagefläche 16 stößt. Hiebei wird über die Chipkarte 2 die Verriegelungseinrichtung 39 so weit verstellt, daß deren Blockieranschlag 49 von der Anschlagfläche 50 am Schieber 19 abhebt, wonach der Schieber 19 unter der Kraft der an ihm angreifenden Zugfeder 32 entgegen der Einschubrichtung 10 von seiner Ruhelage in seine Betriebslage verschoben wird. Durch diese Verschiebung des Schiebers 19 wird über die Stift-Schlitz-Kulissen 55, 56, 57 und 58 der Kontaktträger 53 zur Chipkarte 2 hin verstellt, wobei das am Kontaktträger 53 vorgesehene Andruckelement 75 die Chipkarte 2 gegen die Auflagefläche 16 drückt und die Kontakte 54 des Kontaktträgers 53 mit den nicht dargestellten kartenseitigen Gegenkontakten in Kontaktverbindung treten. Von dem mit seinem Andruckelement 75 an der Chipkarte 2 aufliegenden Kontaktträger 53 wird über die Stift-Schlitz-Kulissen 55, 56, 57 und 58 die Betriebslage des Schiebers 19 bestimmt. Wenn danach der Benützer der Abtasteinrichtung 1 den von Hand aus auf die Chipkarte 2 ausgeübten Druck wegnimmt, wird die Chipkarte 2 um den vorerwähnten geringfügigen Überhub entgegen der Einschubrichtung 10 verschoben, dies aufgrund der von der Schenkelfeder 46 über den Stift 45 auf die Chipkarte 2 ausgeübten Kraft. Durch diese geringfügige Verschiebung der Chipkarte 2 kommt es zu einer Relativbewegung zwischen den Kontakten 54 am Kontaktträger 53 und den kartenseitigen Gegenkontakten, was einen reinigenden Effekt hat und eine sichere Kontaktgabe gewährleistet. Die vorerwähnte geringfügige Verschiebung der Chipkarte 2 entgegen der Einschubrichtung 10 erfolgt so lange, bis sich in der Freigabelage der Verriegelungseinrichtung 39 der Blockieranschlag 49 an der Anschlagfläche 52 in der Ausnehmung 51 des Schiebers 19 abstützt, wodurch dann die Kraft der Schenkelfeder 46 vom Schieber 19 aufgenommen wird und daher keine weitere Verschiebung der Chipkarte 2 entgegen der Einschubrichtung 10 erfolgt. Die Chipkarte 2 ist dann nicht mehr von der Schenkelfeder 46 belastet und wird nur durch das Andruckelement 75 reibungsschlüssig in ihrer Abtastlage gehalten, was besonders einfach ist. Wie erwähnt, wird nach dem vollständigen Einschieben einer Chipkarte 2 in ihre Abtastlage der Schieber 19 entgegen der Einschubrichtung 10 verschoben. Dabei wird auch die mit dem Schieber 19 verbundene Handhabe 38 mitverschoben, was für den Benützer vorteilhafterweise eine deutlich sichtbare Anzeige ergibt, daß die Chipkarte von ihm ordnungsgemäß in ihre Abtastlage eingeschoben wurde. Um eine solche Anzeige besonders deutlich zu gestalten, kann die Handhabe 38 zusätzlich mit sichtbaren Markierungen versehen sein; beispielsweise mit einem färbigen Feld, das nur bei entgegen der Einschubrichtung 10 verschobener Handhabe 38 sichtbar ist.

Zum Auswerfen einer zuvor eingeschobenen Chipkarte 2 aus der Abtasteinrichtung 1 wird die Handhabe 38 von Hand aus in der Einschubrichtung 10 betätigt, wodurch der Schieber 19 in der Einschubrichtung 10 von seiner Betriebslage in seine Ruhelage verschoben wird, wobei die den Schieber 19 belastende Zugfeder 32 gespannt wird. Die Kraft zum Spannen der Zugfeder 32 wird also bei der vorliegenden Abtasteinrichtung 1 vorteilhafterweise von Hand aus aufgebracht und nicht über die Chipkarte 2, was im Hinblick auf eine möglichst geringe mechanische Belastung der Chipkarte 2 von Vorteil ist. Durch diese Verstellung des Schiebers 19 wird über die Stift-Schlitz-Kulissen 55, 56, 57 und 58 der Kontaktträger 53 von der Chipkarte 2 weg verstellt, wobei das Andruckelement 75 und die Kontakte 54 von der Chipkarte 2 abgehoben werden. Sobald durch das Betätigen der Handhabe 38 in der Einschubrichtung 10 der Schieber 19 so weit verschoben ist, daß seine Anschlagfläche 52 den Blockieranschlag 49 freigibt, wird der Verriegelungshebel 40 von der Schenkelfeder 46 in seine Blockierlage verschwenkt, in der sich der Verriegelungshebel 40 mit seinem zweiten Arm 44 an der Seitenplatte 23 des Schiebers 19 abstützt. Durch dieses Verschwenken des Verriegelungshebels 40 wird über den Stift 45 an dessen ersten Arm 43 die Chipkarte 2 entgegen der Einschubrichtung 10 aus der Abtasteinrichtung 1 geschoben. Hiedurch ist erreicht, daß die Chipkarte 2 so weit aus der Abtasteinrichtung 1 geschoben wird, daß auch für den Fall, daß die Abtasteinrichtung in einem Gehäuse eines Gerätes, beispielsweise eines Telefonapparates oder eines anderen Gerätes untergebracht ist, die Chipkarte 2 von einem Benützer bequem ergriffen und vollkommen aus der Abtasteinrichtung 1 beziehungsweise aus dem die Abtasteinrichtung 1 enthaltenden Gerät entnommen werden kann. Zu erwähnen ist noch, daß die Verschiebebewegung des Schiebers 19 in Folge der Betätigung der Handhabe 38 in der Einschubrichtung 10 dadurch begrenzt sein kann, daß die beiden im Stegabschnitt 22 des Schiebers 19 vorgesehenen Langlöcher 27 und 28 mit ihren der Einführöffnung 9 zugewandten Enden gegen die von der Bodenwand 4 des Chassis 3 abstehenden ovalförmigen Erhebungen 14 und 15 stoßen. Es kann aber auch die Verstellbewegung des Kontaktträgers 53 von der Chipkarte 2 weg durch chassisseitige Anschläge begrenzt werden, wobei dann die Verschiebebewegung des Schiebers 19 in der Einschubrichtung 10 von dem Kontaktträger 53 her über die Stift-Schlitz-Kulissen 55, 56, 57 und 58 begrenzt wird.

## Patentansprüche

1. Abtasteinrichtung für eine Chipkarte (2) mit einem Chassis (3), mit einem Aufnahmeraum (8) für die Chipkarte (2), in den die Chipkarte (2) durch eine Einführöffnung (9) hindurch in einer Einschubrichtung (10) in eine Abtastlage einschiebbar ist, mit einem Schieber (19), der am Chassis (3) im wesentlichen parallel zur Einschubrichtung (10) zwischen einer Ruhelage und einer Betriebslage verstellbar geführt und von mindestens einer Feder (32) entgegen der Einschubrichtung (10) belastet ist und der beim Einschieben einer Chipkarte (2) in ihre Abtastlage von seiner Ruhelage in seine Betriebslage verschoben wird und bei dessen Verschiebung von seiner Betriebslage in seine Ruhelage die Chipkarte (2) entgegen der Einschubrichtung (10) aus ihrer Abtastlage verschoben wird, mit einer in der Einschubrichtung betätigbaren Handhabe (38), bei deren Betätigung der Schieber (19) von seiner Betriebslage in seine Ruhelage verschoben wird, und mit einer zwischen einer Blockierlage und einer Freigabelage verstellbare Verriegelungseinrichtung (39), dadurch gekennzeichnet, daß die Verriegelungseinrichtung (39) von mindestens einer weiteren Feder (44) in Richtung zu ihrer Blockierlage belastet ist und in ihrer Blockierlage den Schieber (19) entgegen der Kraft der ihn belastenden Feder (32) in seiner Ruhelage blockiert, daß die Verriegelungseinrichtung (39) einen von der Chipkarte (2) betätigbaren Verstellanschlag (45) aufweist, über den von der Chipkarte (2) am Ende des Einschiebens derselben in ihre Abtastlage die Verriegelungseinrichtung (39) entgegen der Kraft der weiteren Feder (46) in ihre Freigabelage verstellbar ist, daß nach einer Verstellung der Verriegelungseinrichtung (39) in ihre Freigabelage der Schieber (19) unter der Kraft der ihn belastenden Feder (32) entgegen der Einschubrichtung (10) aus seiner Ruhelage in seine Betriebslage verschiebbar ist, daß die Handhabe (38) an dem Schieber (19) vorgesehen ist und durch Betätigen der Handhabe (38) der Schieber (19) entgegen der Kraft der ihn belastenden Feder (32) in der Einschubrichtung (10) aus seiner Betriebslage in seine Ruhelage verschiebbar ist und daß nach einer Verschiebung des Schiebers (19) in seine Ruhelage di Verriegelungseinrichtung (39) unter der Kraft der weiteren Feder (46) in ihre Blockierlage verstellbar ist wobei von dem Verstellanschlag (45) der Verriegelugseinrichtung (39) die Chipkarte (2) entgegen der Einschubrichtung (10) aus ihrer Abtastlage geschoben wird.

2. Abtasteinrichtung nach Anspruch 1, dadurch gekennzeichnet, daß der Schieber (19) einen Begrenzungsanschlag (52) aufweist, an dem sich bei in seine Betriebslage verschobenem Schieber (19) die Verriegelungseinrichtung (39) mit einem Gegenanschlag (49) unter der Kraft der weiteren Feder (46) abstützt.

3. Abtasteinrichtung nach Anspruch 1 oder 2, dadurch gekennzeichnet, daß die Verriegelungseinrichtung (39) einen einzigen am Chassis (3) schwenkbar gelagerten zweiarmigen Verriegelungshebel (40) aufweist, der an seinem einen Arm (43) den von der Chiparte (3) betätigbaren Verstellanschlag (45) und an seinem anderen Arm (44) einen zum Blockieren des Schiebers (19) in seiner Ruhelage vorgesehenen Blockieranschlag (49) aufweist.

4. Abtasteinrichtung nach den Ansprüchen 2 und 3, dadurch gekennzeichnet, daß der Blockieranschlag (49) zusätzlich den Gegenanschlag bildet, mit dem sich bei in seine Betriebslage verschobenem Schieber (19) der Verriegelungshebel (40) an dem Begrenzungsanschlag (5) des Schiebers (16) abstützt.

5. Abtasteinrichtung nach einem der vorhergehenden Ansprüche, dadurch gekennzeichnet, daß der Schieber (19) im wesentlichen plattenförmig ausgebildet ist und mit seiner Plattenebene (20,21,22) im wesentlichen parallel zur Kartenebene der Chipkarte (2) verläuft.

6. Abtasteinrichtung nach Anspruch 5, die einen zu der Chipkarte (2) hin und von derselben weg verstellbaren, zu seiner Verstellung mit dem Schieber (19) gekoppelten Kontaktträger (53) aufweist, der Kontakte (56) trägt, die durch Verschieben des Schiebers (19) in seine Betriebslage und dabei erfolgendem Verstellen des Kontaktträgers (53) zu der Chipkarte (2) hin mit Gegenkontakten an der Chipkarte (2) in Kontaktverbindung bringbar sind, dadurch gekennzeichnet, daß der im wesentlichen plattenförmig ausgebildete Schieber (19) zwei senkrecht von demselben abstehende Seitenplatten (23,24) aufweist und daß der Kontaktträger (53) mit dem Schieber (19) über zwischen dem Kontaktträger und den beiden Seitenplatten (23,24) wirksame Stift-Schlitz-Kulissen (55-58) gekoppelt ist, deren Schlitze (59-62) schräg zur Plattenebene (20, 21, 22) des Schiebers (19) verlaufen, und daß der Kontaktträger (53) quer zur Kartenebene der Chipkarte (2) am Chassis (3) verstellbar geführt ist.

7. Abtasteinrichtung nach Anspruch 6, dadurch gekennzeichnet, daß der Kontaktträger (53) über zwischen dem Kontaktträger (53) und dem Chassis (3) wirksame Stift-Schlitz-Führungen (63-66) am Chassis (3) verstellbar geführt ist.

8. Abtasteinrichtung nach den Ansprüchen 6 und 7, dadurch gekennzeichnet, daß die Stifte (67-70) der Stift-Schlitz-Kulissen (55-58) und der Stift-Schlitz-Führungen (63-66) mit dem Kontaktträger (53) verbunden sind und von demselben seitlich abstehen und daß die Schlitze (59-62) der Stift-Schlitz-Kulissen (55-58) in den Seitenplatten (23,24) des Schiebers (19) und die Schlitze (71-74) der Stift-Schlitz-Führungen (63-66) im Chassis (3) vorgesehen sind.

9. Abtasteinrichtung nach Anspruch 8, dadurch gekennzeichnet, daß jeder der Stifte (67-70) sowohl einer Stift-Schlitz-Kulisse (55-58) als auch einer Stift-Schlitz-Führung (63-66) angehört.

10. Abtasteinrichtung nach einem der Ansprüche 6 bis 9, dadurch gekennzeichnet, daß der Kontaktträger (53) mindestens ein neben den Kontakten (54) angeordnetes Andruckelement (75) aufweist, das bei in seine Betriebslage verschobenem Schieber (19) und dabei zur Chipkarte (2) hin verstelltem Kontaktträger (53) gegen die Chipkarte (2) und dabei die Chipkarte (2) gegen eine Auflagefläche (16) am Chassis (3) drückt.

## Claims

1. A scanning device for a chip card (2) comprising a frame (3) with a holding space (8) for the chip card (2) into which the chip card (2) can be inserted through an inlet opening (6) in an insertion direction (10) into a scanning position, comprising a slide (19) which is adjustably guided over the frame (3) substantially parallel to the insertion direction (10) between a rest position and an operational position, which is loaded by at least one spring (32) against the insertion direction (10), which is moved from its rest position into its operational position upon the insertion of a chip card (2) into its scanning position, and upon whose movement from its operational position into its rest position the chip card (2) is moved from its scanning position against the insertion direction (10), comprising a manual control (38) which can be operated in the insertion direction and upon whose actuation the slide (19) is shifted from its operational position into its rest position, and comprising a locking device (39) which can be switched between a locking position and a release position, characterized in that the locking device (39) is loaded by at least one further spring (46) in the direction of its locking position and in its locking position locks the slide (19) against the force of the spring (32) loading this slide in its rest position, in that the locking device (39) has a control stop (45) which is actuated by the chip card (2) and via which the locking device (39) can be moved against the force of the further spring (46) into its release position by the chip card (2) at the end of its insertion into its scanning position, in that after the locking device (39) has been set in its release position, the slide (19) can be shifted from its rest position into its operational position under the force of the spring (32) loading it against the insertion direction (10), in that the manual control (38) is provided at the slide (19) and the slide (19) can be shifted in the insertion direction (10) from its operational position into its rest position through actuation of the manual control (38) of the slide against the force of the spring (32) loading it, and in that after a shift of the slide (19) into its rest position the locking device (39) can be moved into its locking position under the force of the further spring (46), whereby the chip card (2) is moved from its scanning position in a direction opposite to the insertion direction (10) by the control stop (45) of the locking device (39).

2. A scanning device as claimed in Claim 1, characterized in that the slide (19) comprises a limit stop (52) against which the locking device (39) rests with a counterstop (49) under the force of the further spring (46) when the slide (19) has been shifted into its operational position.

3. A scanning device as claimed in Claim 1 or 2, characterized in that the locking device (39) comprises a single two-arm locking lever (40) pivoting in bearings in the frame (3), which lever has at its one arm (43) the control stop (45) which can be operated by the chip card (2) and at its other arm (44) a blocking stop (49) provided for blocking the slide (19) in its rest position.

4. A scanning device as claimed in Claims 2 and 3, characterized in that the blocking stop (49) also forms the counterstop with which the locking lever (40) rests against the limit stop (52) of the slide (19) when the slide (19) has been moved to its operational position.

5. A scanning device as claimed in any one of the preceding Claims, characterized in that the slide (19) is substantially plate-shaped and runs with its plate surface (20, 21, 22) substantially parallel to the card surface of the chip card (2).

6. A scanning device as claimed in Claim 5, which comprises a contact carrier (53) which is movable towards and away from the chip card (2), which is coupled to the slide (19) in order to be movable, and which carries contacts (56) which can be brought into contact with countercontacts at the chip card (2) through shifting of the slide (19) into its operational position and through the accompanying movement of the contact carrier (53) towards the chip card (2), characterized in that the substantially plate-shaped slide (19) comprises two side plates (23, 24) projecting perpendicularly therefrom, in that the contact carrier (53) is coupled to the slide (19) by means of pin-slot links (55...58) acting between the contact carrier (53) and the two side plates (23 24), whose slots (59...62) run obliquely relative to the plate surface (20, 21, 22) of the slide (19), and in that the contact carrier (53) is arranged at the frame (3) so as to be movable transverse to the card surface of the chip card (2).

7. A scanning device as claimed in Claim 6, characterized in that the contact carrier (53) is movably guided at the frame (3) by means of pin-slot guides (63...66) acting between the contact carrier (53) and the frame (3).

8. A scanning device as claimed in Claims 6 and 7, characterized in that the pins (67...70) of the pin-slot links (55...58) and of the pin-slot guides (63...66) are connected to the contact carrier (53) and project laterally therefrom, and the slots (59...62) of the pin-slot links (55...58) are provided in the side plates (23, 24) of the slide (19), while the slots (71...74) of the pin-slot guides (63...66) are provided in the frame (3).

9. A scanning device as claimed in Claim 8, characterized in that each of the pins (67...70) belongs to both a pin-slot link (55...58) and a pin-slot guide (63...66).

10. A scanning device as claimed in any one of the Claims 6 to 9, characterized in that the contact carrier (53) comprises at least one pressure element (75) arranged next to the contacts (54), which element presses against the chip card (2), thus pressing the chip card (2) against a support surface (16) at the frame (3) when the slide (19) is in its operational position and the contact carrier (53) has accordingly been moved towards the chip card (2).

## Revendications

1. Dispositif d'analyse pour une carte à puce (2), comprenant un châssis (3), un espace récepteur (8) pour la carte à puce (2), dans lequel la carte à puce (2) peut être insérée en position d'analyse à travers une ouverture d'insertion (9), dans une direction d'insertion (10), un coulisseau (19), qui est guidé de manière à pouvoir se déplacer sur le châssis (3), en substance parallèlement à la direction d'insertion (10), entre une position de repos et une position de fonctionnement et est sollicité par au moins un ressort (32) dans un sens opposé à la direction d'insertion (10), et qui est déplacé de sa position de repos à sa position de fonctionnement lors de l'insertion d'une carte à puce (2) dans sa position d'analyse et, lors de son déplacement de sa position de fonctionnement à sa position de repos, la carte à puce (2) est extraite de sa position d'analyse dans un sens opposé à la direction d'insertion (10), un organe d'actionnement (38) susceptible d'être actionné dans la direction d'insertion, suite à l'actionnement duquel le coulisseau (19) est déplacé de sa position de fonctionnement vers sa position de repos, et un dispositif de verrouillage (39) déplaçable entre une position de blocage et une position de libération, caractérisé en ce que le dispositif de verrouillage (39) est sollicité par au moins un autre ressort (44) dans la direction de sa position de blocage et bloque, dans sa position de blocage, le coulisseau (19) dans sa position de repos à l'encontre de la force du ressort qui le sollicite, en ce que le dispositif de verrouillage (39) présente une butée déplaçable (45) pouvant être actionnée par la carte à puce (2), butée par laquelle le dispositif de verrouillage (39) peut être déplacé, à l'encontre de la force de l'autre ressort (44) dans sa position de libération, par la carte à puce (2) à la fin du mouvement d'insertion de celle-ci dans sa position d'analyse, en ce que, après un déplacement du dispositif de verrouillage (39) dans sa position de libération, le coulisseau (19) peut être déplacé de sa position de repos dans sa position de fonctionnement sous la force du ressort (32) qui le sollicite, dans un sens opposé à la direction d'insertion (10), en ce que l'organe d'actionnement (38) est prévu sur le coulisseau (19) et, par actionnement de l'organe d'actionnement (38), le coulisseau (19) peut être déplacé, à l'encontre de la force du ressort (32) qui le sollicite, dans la direction d'insertion (10), de sa position de fonctionnement à sa position de repos, et en ce que, après un déplacement du coulisseau (19) dans sa position de repos, le dispositif de verrouillage (39) peut être déplacé dans sa position de blocage sous la force de l'autre ressort (46), la carte à puce (2) étant alors écartée de sa position d'analyse, dans un sens opposé à la direction d'insertion (10), par la butée déplaçable (45) du dispositif de verrouillage (39).

2. Dispositif d'analyse selon la revendication 1, caractérisé en ce que le coulisseau (19) comporte une butée de limitation (52) sur laquelle le dispositif de verrouillage (39) s'appuie par une contre-butée (49) sous la force de l'autre ressort (46), lorsque le coulisseau (19) est déplacé dans sa position de fonctionnement.

3. Dispositif d'analyse selon la revendication 1 ou 2, caractérisé en ce que le dispositif de verrouillage (39) présente un levier de verrouillage unique (40) à deux bras monté à pivotement sur le châssis (3), ledit levier (40) présentant, sur son premier bras (43), la butée déplaçable (45) actionnée par la carte à puce (2) et, sur son autre bras (44), une butée de blocage (49) prévue pour bloquer le coulisseau (19) dans sa position de repos.

4. Dispositif d'analyse selon les revendications 2 et 3, caractérisé en ce que la butée de blocage (49) forme également la contre-butée par laquelle, lorsque le coulisseau (19) est déplacé dans sa position de fonctionnement, le levier de verrouillage (40) s'appuie sur la butée de limitation (57) du coulisseau (19).

5. Dispositif d'analyse selon l'une quelconque des revendications précédentes, caractérisé en ce que le coulisseau (19) se présente sensiblement sous la forme d'une plaque et s'étend de manière que son plan (20, 21, 22) soit sensiblement parallèle au plan de la carte à puce (2).

6. Dispositif d'analyse selon la revendication 5, qui comporte un support de contacts (53) déplaçable vers la carte à puce (2) et depuis celle-ci, accouplé en vue de son déplacement au coulisseau (19), ledit support portant des contacts (56), qui peuvent être amenés en liaison de contact avec des contre-contacts de la carte à puce (2) par le déplacement du coulisseau (19) dans sa position de fonctionnement et par le déplacement résultant du support de contacts (53) vers la carte à puce (2), caractérisé en ce que le coulisseau (19) sensiblement en forme de plaque présente deux ailes latérales (23, 24) qui se dressent verticalement à partir du coulisseau (19) et en ce que le support de contacts (53) est accouplé au coulisseau (19) via des coulisses à ergots-boutonnières (55-58) opérant entre le support de contacts (53) et les deux ailes latérales (23, 24), coulisses dont lesdites boutonnières (59-62) s'étendent obliquement vis-à-vis du plan de la plaque du coulisseau (19), le support de contacts (53) étant guidé de manière à pouvoir se déplacer sur le châssis (3) transversalement au plan de la carte à puce (2).

7. Dispositif d'analyse selon la revendication 6, caractérisé en ce que le support de contacts (53) est guidé de manière à pouvoir se déplacer sur le châssis (3) via des guidages à ergots-boutonnières (63-66) opérant entre le support de contacts (53) et le châssis (3).

8. Dispositif d'analyse selon les revendications 6 et 7, caractérisé en ce que les ergots (67-70) des coulisses à ergots-boutonnières (55-58) et des guidages à ergots-boutonnières (63-66) sont reliées au support de contacts (53) et en font saillie latéralement et en ce que les boutonnières (59-62) des coulisses à ergots-boutonnières (55-58) sont ménagées dans les ailes latérales (23, 26) du coulisseau (19) et les boutonnières (71-74) des guidages à ergots-boutonnières (63-66) sont ménagées dans le châssis (3).

9. Dispositif d'analyse selon la revendication 8, caractérisé en ce que chacun des ergots (67-70) fait partie autant d'une coulisse à ergots-boutonnières (55-58) que d'un guidage à ergots-boutonnières (63-66).

10. Dispositif d'analyse selon l'une quelconque des revendications 6 à 9, caractérisé en ce que le support de contacts (53) comporte au moins un élément de pression (75) agencé à côté des contacts (54), lequel élément, lorsque le coulisseau (19) est déplacé dans sa position de fonctionnement et que le support de contacts (53) est déplacé vers la carte à puce (2), est pressé contre la carte à puce (2) et presse ainsi la carte à puce (2) contre une surface d'appui (16) sur le châssis (3).
